# EUROPÄISCHE PATENTSCHRIFT

(11) **EP 1 387 330 B1**
(45) Veröffentlichungstag und Bekanntmachung des Hinweises auf die Patenterteilung: **01.07.2009**
(21) Anmeldenummer: 03015067.6
(22) Anmeldetag: 03.07.2003
(51) Int. Cl.: G08B 13/191

(54) **Passiv-Infrarot-Bewegungsmelder**
Passive infrared motion sensor
Capteur de mouvement infrarouge passif

(30) Priorität: 02.08.2002 DE 10235292
(43) Veröffentlichungstag der Anmeldung: 04.02.2004
(73) Patentinhaber: ABB AG, 68309 Mannheim (DE)
(72) Erfinder: Heveroch, Ivan, 50935 Köln (DE); Blomberg, Lothar, Dipl.-Ing., 58809 Neuenrade (DE); Lang, Jens-Olaf, Dipl.-Ing., 01462 Cossebaude (DE)

(56) Entgegenhaltungen:
- EP-A- 0 250 746
- EP-A- 0 617 290
- EP-A- 1 160 751
- CH-A- 683 473
- GB-A- 2 311 158
- US-A- 5 217 296
- US-B1- 6 215 399

## Beschreibung

Die Erfindung betrifft einen Passiv-Infrarot-Bewegungsmelder zur Erfassung von Bewegungen von Personen. Solche Bewegungsmelder sind beispielsweise aus dem Fachbuch "Passiv-Infrarot-Bewegungsmelder", Verlag Moderne Industrie, Landsberg/Lech, 1996 bekannt.

Aus EP 0 617 290 A1 ist ein Bewegungsmelder bekannt, der zwei Sensoren aufweist. Der erste Sensor ist als Bewegungssensor zur Überwachung eines großen Überwachungsbereiches, der zweite Sensor als Thermosensor zur Überwachung eines kleinen Überwachungsbereiches angeordnet, wobei der kleine Bereich innerhalb des großen Bereiches liegt. Der zweite Sensor wird vom ersten Sensor freigegeben, sobald der erste Sensor eine Bewegung erkennt. Eine zum Zeitpunkt der Freigabe des zweiten Sensors erfaßte Temperatur wird als Referenztemperatur gespeichert und zur Signalauswertung herangezogen. Mittels Auswertung aufbereitete Ausgangssignale der beiden Sensoren werden über ein ODER-Gatter zu einem einzigen Ausgangssignal verknüpft, das zum Ein- und Aus-Schalten einer Beleuchtung genutzt wird. Die Anordnung hat den Zweck, eine sich im kleinen Bereich aufhaltende Person auch dann noch detektieren zu können, wenn sie sich nicht mehr bewegt, also einfach präsent ist, und die Einschaltdauer der Beleuchtung davon abhängig zu steuern.

Eine weitere Bewegungsmelderausführung mit zwei Sensoren ist aus EP 1 160 751 A1 bekannt. Dabei ist der erste Sensor ein pyroelektrischer Sensor zur Überwachung eines großen Bereiches, der zweite Sensor ein Sensor einer anderen Art, insbesondere ein Radar-System zur Überwachung eines kleinen Bereiches, wobei der kleine Bereich innerhalb des großen Bereiches liegt. Ein Vorteil dieser Anordnung ist ihre Eignung als Sicherheitssystem, da Fehlmeldungen besser vermieden werden als bei einem Standard-Bewegungsmelder. Diese Eigenschaft wird dadurch erreicht, daß bei einer Personendetektion mittels des ersten Sensors ein Einschalten des einzigen Ausgaberelais nur dann freigegeben wird, wenn auch der Radar-Sensor eine Bewegung detektiert hat. Eine durch das Ausgaberelais gesteuerte Alarmmeldung kann dabei auch noch von einer ermittelten Bewegungsrichtung und/oder Bewegungsgeschwindigkeit abhängig gemacht werden

Den bekannten Bewegungsmeldern mit zwei Sensorsystemen ist gemeinsam, daß sie nur einen Schaltausgang aufweisen, wodurch keine differenzierten Schaltungen oder Meldungen möglich sind.

Der Erfindung liegt daher die Aufgabe zugrunde, einen Bewegungsmelder mit mindestens zwei Schaltausgängen anzugeben, die gemäß unterschiedlicher Kriterien aktivierbar sind.

Diese Aufgabe wird durch einen Bewegungsmelder gelöst, der die im Anspruch 1 angegebenen Merkmale aufweist. Vorteilhafte Ausgestaltungen sind in weiteren Ansprüchen angegeben.

Mit der Erfindung wird demnach ein Bewegungsmelder vorgeschlagen, der einen im Prinzip einfachen Aufbau hat, aber als Universalgerät - auch nachträglich änderbar - an unterschiedliche Bedarfsfälle anpaßbar ist. Der Bewegungsmelder weist dazu mehrere optische Systeme zur Bildung sich im wesentlichen nicht überlappender Erfassungsbereiche auf, deren Ausgangssignale einer Verarbeitungseinrichtung zugeführt sind, die wiederum mehrere Schaltausgänge ansteuert. Die Verarbeitungseinrichtung enthält vorteilhaft einen Mikrocomputer, der entsprechend der benötigten Signalverknüpfungen programmierbar ist.

Besondere Vorteile ergeben sich aus den aneinandergrenzenden Erfassungsbereichen in Verbindung mit der mehr als einen Schaltausgabe, weil damit neue Funktionen realisierbar sind. Außerdem kann der Bewegungsmelder durch entsprechende Mittel im Baukastensystem für alle gängigen Zusatzfunktionen wie Dämmerungsschalter, erweitert werden.

Eine weitere Erläuterung der Erfindung erfolgt nachstehend anhand von Ausführungsbeispielen, die in Zeichnungsfiguren dargestellt sind.

Es zeigt:
Fig. 1 ein Blockschema eines erfindungsgemäßen Bewegungsmelders, und
Fig. 2 beispielhafte Überwachungsbereiche.

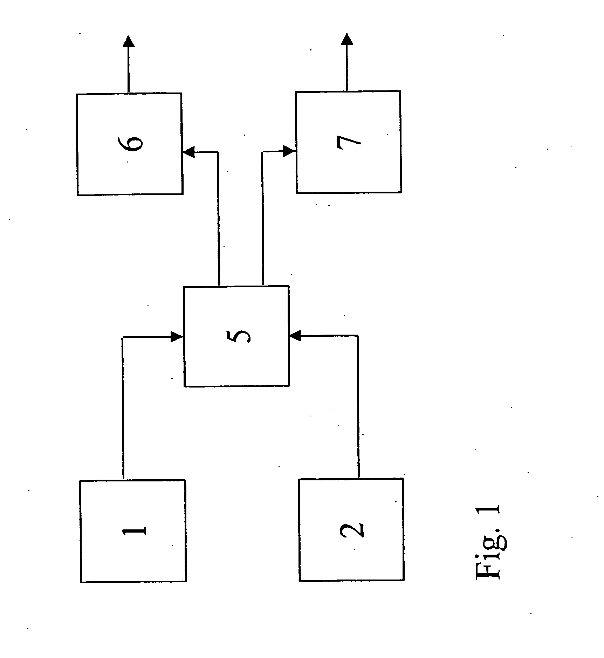

Fig. 1 zeigt ein Blockschema eines erfindungsgemäßen Bewegungsmelders, der zwei optische Systeme 1, 2 zur Erfassung von Personenbewegungen, eine Signalverarbeitungseinrichtung oder Auswerteeinrichtung 5 und zwei Schaltausgänge 6, 7 aufweist. Der Auswerteeinrichtung 5 sind Ausgangssignale der beiden optischen Systeme 1, 2 zugeführt. Die Schaltausgänge 6, 7 sind durch die Auswerteeinrichtung 5 gesteuert. Diese Funktionseinheiten sind als Minimalausstattung aufzufassen, wie weiter unten erläutert ist.

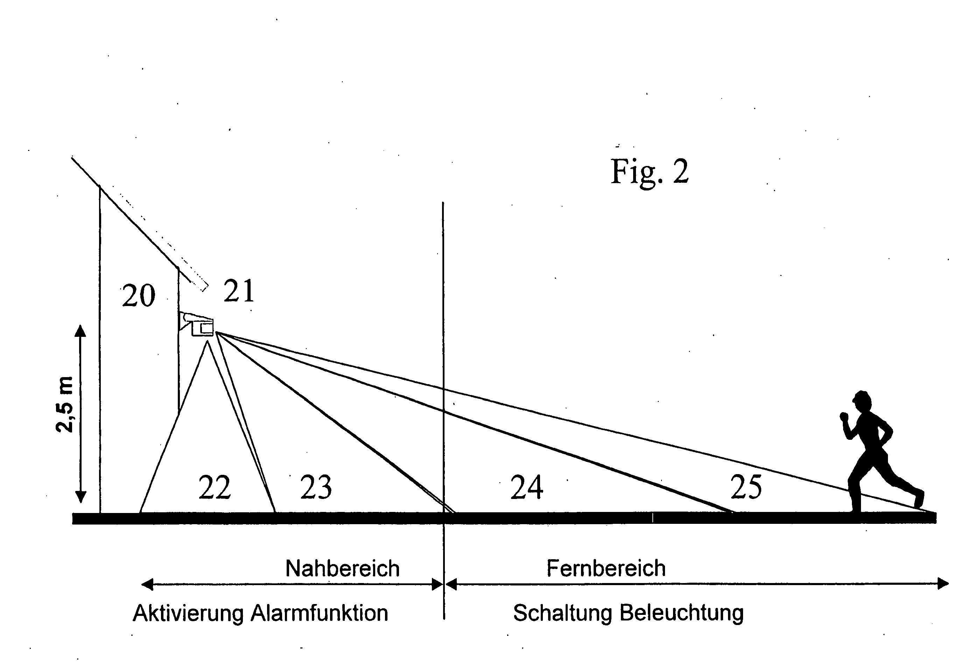

Die optischen Systeme 1, 2 enthalten jeweils wenigstens einen Infrarotsensor und optisch abbildende Elemente, wie Linsen und Spiegel, und sind jeweils für einen bestimmten Erfassungsbereich (vergl. Fig. 2) ausgelegt. So kann beispielsweise das erste optische System 1 für eine Personenerfassung in einem Fernbereich, und das zweite optische System 2 für eine Personenerfassung in einem Nahbereich konzipiert sein.

Der erste Schaltausgang 6 ist üblicherweise zur Steuerung einer Beleuchtungseinrichtung vorgesehen, wobei die Beleuchtungseinrichtung typisch für eine bestimmte Dauer eingeschaltet wird, wenn eine Personenbewegung in irgend einem der überwachten Bereiche detektiert wird.

Der zweite Schaltausgang 7 kann beispielsweise für Alarme genutzt werden und dazu mit einem optischen oder akustischen Signalgeber verbunden werden. Je nach Anwendung kann die Aktivierung des zweiten Schaltausgangs 7 von bestimmten Bedingungen abhängig gemacht werden. Beispielsweise kann durch Signalauswertung in der Auswerteeinrichtung 5 ein Alarm dann ausgelöst werden, wenn sich eine Person in einer bestimmten Richtung und mit bestimmter Geschwindigkeit bewegt. So kann beispielsweise eine Personendetektion in den Bereichen 23 und 24 (Fig. 2) in einer bestimmten Reihenfolge und einem bestimmten Zeitabstand einen Alarm auslösen.

Das erzeugte Alarmsignal kann auch allein oder zusätzlich intern, beispielsweise zur Aktivierung eines am Bewegungsmelder befindlichen Blinklichts oder eines anderen alarmgebenden Elements genutzt werden.

In Fig. 2 sind beispielhaft Erfassungsbereiche dargestellt, die mit dem erfindungsgemäßen Bewegungsmelder überwacht werden können. In der Darstellung ist an einem Gebäude 20 ein Bewegungsmelder 21 in üblicher Anordnungshöhe montiert. Der Bewegungsmelder 21 ist zumindest für eine Überwachung eines Nahbereichs 23 und eines Fernbereichs 24 eingerichtet. Der Nahbereich ist nicht ein Teil des Fernbereichs, sondern grenzt an diesen an. Nahbereich 23 kann z. B. ein Bereich von 1 bis 5 m Entfernung vom Gebäude sein, der Fernbereich 24 ein Bereich von 5 bis 20 m sein.

Es können außerdem noch zusätzliche Erfassungsbereiche 22, 25 vorgesehen sein. In Fig. 2 ist z. B. ein sogenannter Unterkriech- und Rückfeldbereich 22 dargestellt, mit dem eine Person in Gebäudenischen, z. B. im Eingangstürbereich detektierbar ist. Entsprechend kann ein Zusatzbereich 25 vorgesehen werden, der sich an den dann möglicherweise als Mittelbereich - für 5 bis 12 m - gestalteten Fernbereich 24 anschließt.

Entsprechend den zusätzlichen Erfassungsbereichen 22, 25 können auch zusätzliche Schaltausgänge vorgesehen werden, die nicht in Zeichnungsfiguren dargestellt sind. Damit werden differenzierte Reaktionen oder Meldungen auf Personendetektionen in den einzelnen Erfassungsbereichen möglich. Beispielsweise kann eine sich vom Gebäude weg bewegende Person durch die Reihenfolge ihrer Erfassung in den einzelnen Bereichen detektiert werden und keine oder eine andere Meldung auslösen als eine sich auf das Gebäude zu bewegende Person. Solche und weitere Funktionen sind mittels einer programmierbaren und entsprechend programmierten Auswerteeinrichtung 5 möglich. Dabei kann eine Auswertung durch Vergleich eines sich durch Erfassung aktuell ergebenden Bewegungsmusters mit gespeicherten Mustern erfolgen.

Die einzelnen Erfassungsbereiche 22, 23, 24 und 25 sind mittels gegeneinander abgegrenzte, bzw. abgeschirmte optische Systeme des Bewegungsmelders gebildet.

## Patentansprüche

1. Passiv-Infrarot-Bewegungsmelder, mit
a) einem ersten optischen System (1) zur Erfassung einer Personenbewegung in einem Fernbereich (24),
b) einem zweiten optischen System (2) zur Erfassung einer Personenbewegung in einem Nahbereich (23), wobei die beiden Bereiche (23, 24) im wesentlichen aneinandergrenzende Bereiche sind,
c) einer Auswerteeinrichtung (5), der Ausgangssignale der beiden optischen Systeme (1, 2) zugeführt sind, und
d) einem ersten Schaltausgang (6) und wenigstens einem zusätzlichen Schaltausgang (7), die durch die Auswerteeinrichtung (5) gesteuert sind, **dadurch gekennzeichnet, dass**
e) an den ersten Schaltausgang (6) eine Beleuchtungseinrichtung angeschlossen ist, und die Auswerteeinrichtung (5) dafür eingerichtet ist, die Beleuchtungseinrichtung jeweils für eine einstellbare Dauer einzuschalten, wenn eine Personenbewegung in einem der Bereiche (23, 24) detektiert wird,
f) an den zweiten Schaltausgang (7) eine Alarm- oder Meldeeinrichtung angeschlossen ist, und die Auswerteeinrichtung (5) dafür eingerichtet ist, die Alarm- oder Meldeeinrichtung nur dann zu aktivieren, wenn eine Personenbewegung in den Bereichen (23, 24) in einer festgelegten Reihenfolge und/oder Mindestgeschwindigkeit detektiert wird.

2. Bewegungsmelder nach Anspruch 1, **dadurch gekennzeichnet, dass** im Bewegungsmelder ein alarmgebendes Element vorhanden ist, das zusätzlich zum zweiten Schaltausgang im Alarm- oder Meldefall aktiviert wird.

3. Bewegungsmelder nach einem der vorstehenden Ansprüche, **dadurch gekennzeichnet, daß** die optischen Systeme (1, 2) jeweils mindestens einen Infrarotsensor und mindestens eine Linse enthalten.

4. Bewegungsmelder nach einem der vorstehenden Ansprüche, **dadurch gekennzeichnet, daß** wenigstens ein optisches System (1, 2) wenigstens einen Spiegel enthält.

5. Bewegungsmelder nach einem der vorstehenden Ansprüche, **dadurch gekennzeichnet, daß** sich die optischen Systeme (1, 2) in unterschiedlichen Anordnungsebenen befinden, wodurch sich in Verbindung mit Abschirmmitteln für optische Strahlung die gewünschten Erfassungsbereiche (23, 24) ergeben.

6. Bewegungsmelder nach einem der vorstehenden Ansprüche, **dadurch gekennzeichnet, daß** optische Mittel zur Bildung eines Unterkriech- und Rückfeldbereiches (22) als weiterer Erfassungsbereich vorhanden sind.

7. Bewegungsmelder nach einem der vorstehenden Ansprüche, **dadurch gekennzeichnet, daß** optische Mittel zur Erweiterung des Fernbereichs (24) um einen Zusatz-Fernbereich (25) vorhanden sind.

## Claims

1. A passive infrared motion detector, comprising
a) a first optical system (1) for detecting the motion of persons in a far region (24);
b) a second optical system (2) for detecting the motion of persons in a near region (23), with the two regions (23, 24) being substantially adjoining regions;
c) an evaluation device (5) which is supplied with the output signals of the two optical systems (1, 2), and
d) a first switching output (6) and at least one additional switching output (7) which are controlled by the evaluation device (5),
**characterized in that**
e) an illumination device is connected to the first switching output (6) and the evaluation device (5) is set up to activate the illumination device for an adjustable duration when a motion of a person is detected in one of the regions (23, 24);
f) an alarm or signaling device is connected to the second switching output (7) and the evaluation device (5) is set up to only activate the alarm and signaling device when a motion of a person is detected in the regions (23, 24) in a fixed sequence and/or minimum speed.

2. A motion detector according to claim 1, **characterized in that** an alarming element is present in the motion detector which is activated in addition to the second switching output in the case of alarm or signaling.

3. A motion detector according to one of the preceding claims, **characterized in that** the optical systems (1, 2) each contain at least one infrared sensor and at least one lens.

4. A motion detector according to one of the preceding claims, **characterized in that** at least one optical system (1, 2) contains at least one mirror.

5. A motion detector according to one of the preceding claims, **characterized in that** the optical systems (1, 2) are disposed in different arrangement planes, through which the desired detection regions (23, 24) are obtained in conjunction with screening means for optical radiation.

6. A motion detector according to one of the preceding claims, **characterized in that** optical means for forming an underneath-crawling and backfield region (22) as a further detection region.

7. A motion detector according to one of the preceding claims, **characterized in that** optical means are provided for extending the far region (24) by an additional far region (25).

## Revendications

1. Détecteur de mouvement passif à infrarouges avec
a) un premier système optique (1) pour la détection d'un mouvement d'une personne dans une zone éloignée (24),
b) un deuxième système optique (2) pour la détection d'un mouvement d'une personne dans une zone proche (23), les deux zones (23, 24) étant des zones sensiblement limitrophes,
c) un dispositif d'interprétation (5) auquel sont amenés les signaux de sortie des deux systèmes optiques (1, 2), et
d) une première sortie de commutation (6) et au moins une sortie de commutation supplémentaire (7), qui sont commandées par le dispositif d'interprétation (5),
**caractérisé en ce que :**
e) un dispositif d'éclairage est connecté à la première sortie de commutation (6) et le dispositif d'interprétation (5) est équipé pour activer le dispositif d'éclairage pour une durée paramétrable quand un mouvement d'une personne est détecté dans l'une des zones (23, 24),
f) un dispositif d'alarme ou de signalisation est connecté à la deuxième sortie de commutation (7) et le dispositif d'interprétation (5) est équipé pour n'activer le dispositif d'alarme ou de signalisation que si un mouvement d'une personne est détecté dans les zones (23, 24) dans un ordre fixé et/ou à une vitesse minimum.

2. Détecteur de mouvement selon la revendication 1, **caractérisé en ce qu'**il est prévu dans le détecteur de mouvement un élément générateur d'alarme qui est activé en plus de la deuxième sortie de commutation en cas d'alarme ou de signalisation.

3. Détecteur de mouvement selon l'une des revendications précédentes, **caractérisé en ce que** les systèmes optiques (1, 2) contiennent chacun au moins un capteur à infrarouges et au moins une lentille.

4. Détecteur de mouvement selon l'une des revendications précédentes, **caractérisé en ce qu'**au moins un système optique (1, 2) contient au moins un miroir.

5. Détecteur de mouvement selon l'une des revendications précédentes, **caractérisé en ce que** les systèmes optiques (1, 2) se trouvent dans des plans de disposition différents, ce qui crée les zones de détection (23, 24) souhaitées en association avec des moyens faisant écran au rayonnement optique.

6. Détecteur de mouvement selon l'une des revendications précédentes, **caractérisé en ce que** des moyens optiques sont prévus pour former une zone de dissimulation et de repli (22) comme autre zone de détection.

7. Détecteur de mouvement selon l'une des revendications précédentes, **caractérisé en ce que** des moyens optiques sont prévus pour agrandir la zone éloignée (24) d'une zone éloignée supplémentaire (25).
